# EUROPEAN PATENT APPLICATION

(11) **EP 1 939 597 A1**
(43) Date of publication of application: **02.07.2008**
(21) Application number: 06796690.3
(22) Date of filing: 23.08.2006
(51) Int. Cl.: G01L 3/10, B62D 5/04

(54) **ELECTRIC POWER STEERING DEVICE**

(30) Priority: 30.09.2005 JP 2005286829; 06.04.2006 JP 2006105018
(71) Applicant: NSK Ltd., Tokyo 141-8560 (JP)
(72) Inventor: SEGAWA, Toru c/o NSK Ltd, Gunma 371-8528 (JP)
(74) Representative: Grünecker, Kinkeldey, Stockmair & Schwanhäusser Anwaltssozietät
(86) International application number: PCT/JP2006/316527
(87) International publication number: WO 2007/039996

(57) **Abstract**

In an electric power steering apparatus equipped with a torque sensor that detects torque, the torque sensor has a coil yoke, a coil disposed within the coil yoke, a base section, and a yoke retainer which covers the coil yoke and fixes the coil yoke to the base section.

## Description

### Technical Field

The present invention relates to an electric power steering apparatus using an electric motor as a source for generating auxiliary steering torque. More specifically, the present invention relates to a structure of a torque sensor that detects torque generated in an input shaft of a steering mechanism.

### Background Art

An electric power steering apparatus used in a vehicle is configured so as to drive an electric motor in accordance with steering torque imparted by a steering wheel and to transmit rotation of the electric motor to an output shaft coupled to a steering mechanism via a speed reduction mechanism, thereby assisting steering operation. Such an electric power steering apparatus is equipped with a torque sensor for detecting the steering torque. The torque sensor is configured so as to detect the amount of deformation of a torsion bar coupled to an input shaft and an output shaft of the steering mechanism, thereby detecting steering torque.

Incidentally, in order to accurately detect the amount of deformation of the torsion bar, the torque sensor of this type must be fixed to a housing such that a coil is not moved in an axial direction of the input and output shafts.
Accordingly, for instance, Patent Document 1 discloses as a means for solving the drawback a torque sensor which is fixed without involvement of rattling, by use of a snap ring.

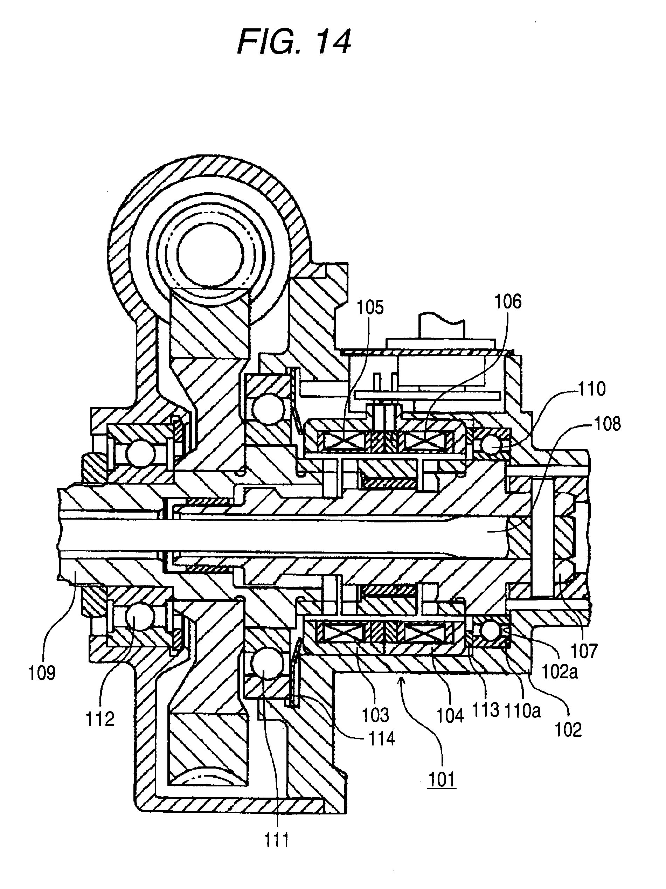

Fig. 14 is a cross-sectional view showing an example torque sensor section of a conventional electric power steering apparatus disclosed in Patent Document 1. In the drawing, a torque sensor 101 has a pair of cylindrical coil yokes (coil holders) 103 and 104; coils 105 and 106 retained in the respective coil yokes 103 and 104; and an input axis (input shaft) 107 enclosed by the coils 105 and 106, all of which are disposed within a sensor housing 102. In accordance with outputs from the coils 105 and 106, the torque sensor 101 is configured so as to detect steering torque.

The input shaft 107 is also coupled to an output axis (output shaft) 109 via a torsion bar 108 and is supported rotatably by the housing 102 via a bearing 110. Meanwhile, the output shaft 109 is rotatably supported by the housing 102 by bearings 111 and 112.

Moreover, a spacer 113 is interposed between the coil yoke 104 and an outer ring 110a of the bearing 110. A snap ring 114 fitted around an inner radius of the housing 102 remains in contact with one end of the coil yoke 103. This snap ring 114 has a structure for imparting resilient urging force in the axial direction of the input shaft 107 and the output shaft 109. By this structure, there is imparted elastic restoration for pressing the coil yokes 103 and 104 against a receiving section 102a of the housing 102 by the spacer 113 and the outer ring 110a of the bearing 110. Consequently, the coil yokes 103 and 104 are fixed to the housing 102 without any rattle being generated.

Patent Document 2 discloses, for example, a torque sensor where a disc spring is provided in place of the snap ring 114 disclosed in Patent Document 1 and where a coil yoke is fixed to a housing by elastic restoration of the spring.

In such a torque sensor, important problem is to facilitate assembly of a coil yoke (a sensor section) and a sensor substrate (a circuit board) into a housing and enhance the reliability of a connection between the sensor substrate and respective terminals (a termination device), thereby preventing occurrence of connection failures.

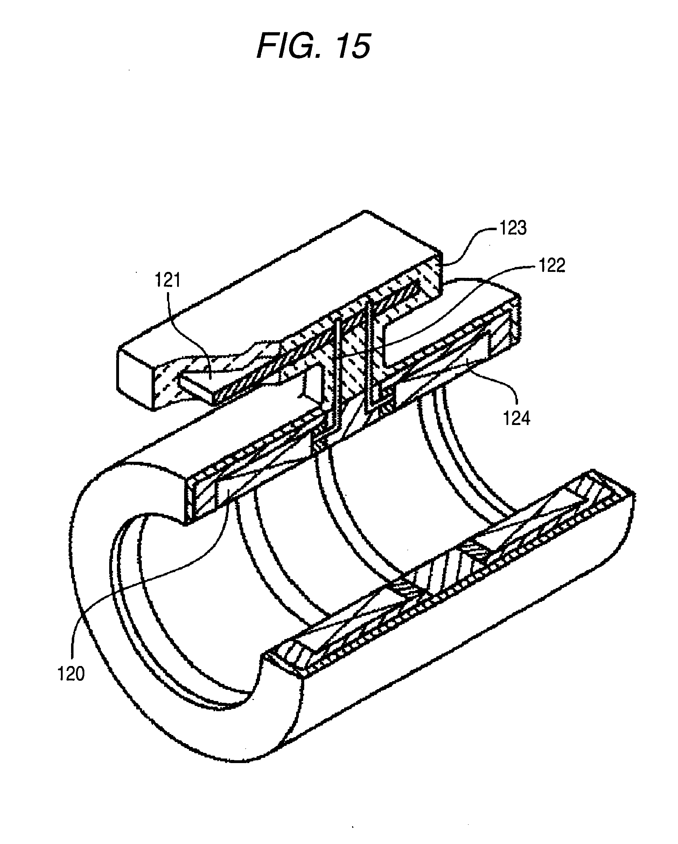

Accordingly, for instance, Patent Document 3 discloses, as a torque sensor for solving such a problem, a torque sensor where front and rear sides of a circuit board 121 and outer sides of connection leads 122, 122 are coated with a resin layer 123 while a sensor coil 120 and the circuit board 121 remain connected together as shown in Fig. 15, to thus integrate the circuit board 121, the sensor coil 120, and a temperature compensation coil 124 into a single piece.

Patent Document 1: Japanese Patent Unexamined Publication JP-A-2002-130234
Patent Document 2: Japanese Patent Unexamined Publication JP-A-2000-193541
Patent Document 3: Japanese Patent Unexamined Publication JP-A-2004-233296

### Disclosure of the Invention

### Problem that the Invention is to Solve

However, since fixing members, such as the snap ring 114, the disc spring, and the like, are disposed in the torque sensors disclosed in Patent Documents 1 and 2, space for the fixing member must be ensured within the housing 102. This induces an increase in the axial dimensions of the input and output shafts 107 and 109, which in turn poses difficulty in ensuring collapse stroke.

In addition to having the fixing members mentioned above, the torque sensors disclosed in Patent Documents 1 and 2 also require members for supporting and fixing an outer diameter of the coil yoke. Hence, difficulty is encountered in attaining miniaturization.

In the torque sensor disclosed in Patent Document 3, the front and rear sides of the circuit board 121 are molded of the resin layer 123. Therefore, there arises a problem of requiring a high degree of precision of components as well as difficulty in assuring soldering of the circuit board 121, which in turn incurs an increase in production cost.

Accordingly, the present invention has been conceived against the foregoing drawback and aims at providing an electric power steering apparatus which prevents a coil from moving in an axial direction of input and output shafts, has a torque sensor improved so as to reduce axial space required during assembly of the torque sensor to a housing, facilitates a structure for assembling the torque sensor, and cuts production cost.

### Means for solving the problem

According to the invention, there is provided an electric power steering apparatus comprising:
a torque sensor that detects torque and comprises:
   a coil yoke;
   a coil disposed within the coil yoke;
   a base section; and
   a yoke retainer which covers the coil yoke and fixes the coil yoke to the base section.

Further, according to the invention, it is adaptable that the yoke retainer comprises an elastic section for pressing the coil yoke against the base section.

According to the invention, it is adaptable that the base section comprises:
a hollow columnar projection section fitting around an outer diameter of the coil yoke; and
engaged sections formed along an inner periphery of the hollow columnar projection section; and
the yoke retainer comprises engaging sections meshing with the engaged sections.

According to the invention, it is adaptable that the engaging sections comprise pawls bent outward in a radial direction; and
the engaging sections are elastically pressed against the engaged sections when the yoke retainer is pushed into the hollow columnar projection section.

According to the invention, it is adaptable that the elastic section is a disc spring.

According to the invention, it is adaptable that the elastic section is a leaf spring.

According to the invention, there is provided an electric power steering apparatus comprising:
a torque sensor that detects torque and comprises:
   a coil yoke;
   a coil disposed within the coil yoke;
   a sensor substrate that outputs a signal in accordance with torque detected by the coil;
   a case section that accommodates the sensor substrate;
   a base section comprising a plate section which support and fix the sensor substrate and the case section thereon; and
   a harness terminal section which is connected to the sensor substrate and interposed between the plate section and the case section, wherein
   the sensor substrate is fastened to the plate section by a fastening member so that positions of the sensor substrate, the case section and the harness terminal section are determined, and the sensor substrate, the case section, and the harness terminal section are monolithically fixed.

According to the invention, there is provided an electric power steering apparatus comprising:
a torque sensor that detects torque and comprises:
   a coil yoke;
   a coil disposed within the coil yoke;
   a plate-like base section to which the coil yoke is fixed;
   a metal frame member provided upright on the base section perpendicular thereto; and
   a sensor substrate which is fixedly fastened to the frame member by a fastening member and which outputs a signal in accordance with torque detected by the coil.

According to the invention, it is adaptable that the frame member comprises:
a bottom surface section comprising a substrate base to which the sensor substrate is fixed;
a fixed section which is formed along one edge face of the bottom surface section and is fixed to the base section; and
a protective wall section which is formed along the other edge face of the bottom surface section and comprises such a height as to protrude from a surface of the sensor substrate.

According to the invention, it is adaptable that the frame member is made from a single steel plate.

According to the invention, it is adaptable that the fixed section is formed by folding downward the one edge face of the bottom surface section at a right angle, and
the protective wall section is formed by folding upward the other side edge face of the bottom surface section at a right angle.

### Advantages of the Invention

According to the torque sensor of the electric power steering apparatus of the present invention, in order to fix the coil yoke to the base section in a supported manner, there is provided the yoke retainer that enables pressing and fixing of the coil yoke against the based section while covering the coil yokes. As a result, a necessity for providing a fixing component in the axial direction of the input and output shafts is obviated. Consequently, the torque sensor can be miniaturized, and a sufficient collapse stroke can be ensured.

Moreover, the base section has a hollow columnar projection section fitting around an outer diameter of the coil yoke; engaged sections which are larger in diameter than the hollow columnar projection section are formed along an inner periphery of the hollow columnar projection section; and the yoke retainer is provided with engaging sections having pawls bent outward in the radial direction; and an elastic section for pressing the coil yoke against the base section. As a result, by only pushing the engaging sections of the yoke retainer covering the coil yoke into the hollow columnar projection section so as to coincide with the positions of the engaged sections, the coil yoke is supported and fixed to the base section. Consequently, the number of processes and labor required for assembly can be lessened, and the cost of the system can be curtailed.

Further, the torque sensor of the present invention has a coil yoke for accommodating a coil; a sensor substrate that outputs a signal in accordance with torque detected by the coil; a base section for fixedly supporting the coil yoke and the sensor substrate; a case section that accommodates the sensor substrate; and a harness terminal section to be connected with the sensor substrate. These constituent components are modularized. As a result, the components can be made common, and production cost can be curtailed.

Moreover, the position of the sensor substrate, the position of the case section, and the position of the harness terminal section are determined by only fastening the sensor substrate to the plate section with a fastening member, and the sensor substrate, the case section, and the harness terminal section are fixed in an integrated fashion. As a result, the labor required when the respective constituent components are assembled can be lessened. Moreover, the respective constituent components are already fixed to the base section when being soldered. Hence, more reliable soldering can be effected.

The coil yoke is supported and fixed on the flat-plate-shaped base section made from a steel plate or the like. The sensor substrate is fastened, by the fasteningmember, to the metal frame member provided upright on the base section at a right angle. By this structure, the sensor substrate can be fixed without posing difficulty in assurance of soldering of the respective connection sections of the sensor substrate. Therefore, the torque sensor can be assembled efficiently without entailment of laborious operation.

The base section is formed from a flat metal plate, such as a steel plate, and the frame member can be formed from a single flat plate such as a steel plate by, e.g., pressing. Accordingly, operation for machining of the members is facilitated, and production cost can be curtailed.

The frame member further has a protective wall section which is provided on the edge face opposite the fixed section to be fixed to the base section and which has such a height as to protrude from the surface of the sensor substrate fixedly supported by the frame. By this structure, when the torque sensor is built into a gear box, the sensor substrate can be protected from interference arising between the gear box and the torque sensor, thereby preventing occurrence of breakage.

### Brief Description of the Drawings

Fig. 1 is a partially-broken side view showing an electric power steering apparatus of an embodiment of the present invention.
Fig. 2 is a partially-broken front view showing the appearance of a torque sensor of a first embodiment of the present invention.
Fig. 3 is a cross-sectional view of the torque sensor taken along line III-III shown in Fig. 2 when viewed in the direction of the arrows.
Fig. 4 is a developed view showing individual components constituting the torque sensor of the first embodiment.
Fig. 5 is a perspective view of a principal section showing a hollow, columnar projection section provided in a base section of the torque sensor of the first embodiment.
Fig. 6 is a perspective view showing a yoke retainer of the torque sensor of the first embodiment.
Fig. 7 is a rear view showing the appearance of a torque sensor of a second embodiment of the present invention.
Fig. 8 is a cross-sectional view of the torque sensor taken along line VIII-VIII shown in Fig. 7 when viewed in the direction of the arrows.
Fig. 9 is a perspective view showing a yoke retainer of the torque sensor of the second embodiment.
Fig. 10 is a partially-broken front view showing the appearance of a torque sensor of a third embodiment of the present invention.
Fig. 11 is a top view of the torque sensor when viewed from the direction of arrow XI shown in Fig. 10.
Fig. 12 is a cross-sectional view of the torque sensor taken along line XII-XII shown in Fig. 11 when viewed in the direction of the arrows.
Fig. 13 is a view of the torque sensor of the third embodiment attached to a gear box when viewed from a steering wheel.
Fig. 14 is a cross-sectional view sowing an example torque sensor section of a conventional electric power steering apparatus.
Fig. 15 is a partially-broken perspective view showing an example conventional torque sensor.

### Descriptions of the Reference Numerals

- 12: COIL YOKE
- 13: COIL
- 14, 14A: TORQUE SENSORS
- 15: SENSOR SUBSTRATE
- 16, 16A: BASE SECTIONS
- 16a: HOLLOW COLUMNAR PROJECTION SECTION
- 16b: PLATE SECTION
- 17, 17A: YOKE RETAINERS
- 18: CASE SECTION
- 21: HARNESS TERMINAL SECTION
- 22, 22A: SCREWS
- 25: ENGAGED SECTION
- 26: ENGAGING SECTION
- 27: ELASTIC SECTION
- 28: PAWL
- 37: FRAME MEMBER
- 37a: BOTTOM SURFACE SECTION
- 37b: FIXED SECTION
- 37c: PROTECTIVE WALL SECTION
- 39: SUBSTRATE BASE

### Best Modes for Implementing the Invention

Embodiments of the present invention will be described hereunder by reference to the drawings.

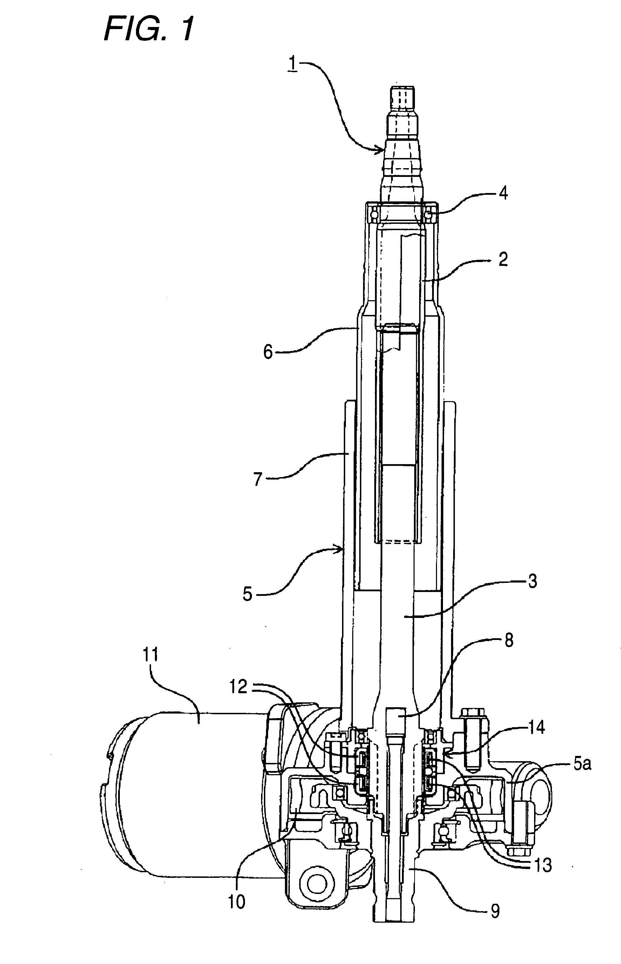

Fig. 1 is a partially-broken side view showing an electric power steering apparatus of an embodiment of the present invention. In the drawing, a steering shaft 1 which rotates in accordance with actuation of a steering wheel is joined by fixedly press-fitting a cylindrically-axial solid inner shaft (an input shaft) 3 into a cylindrical outer shaft 2. This steering shaft 1 is rotatably supported by an end section of a steering column 5 via a bearing 4. The steering column 5 is joined by fixedly press-fitting a cylindrical inner column 6 into an outer column 7.

The steering shaft 1 and the steering column 5 have a collapsible structure, wherein, when a heavy load is axially imposed on the steering shaft 1 and the steering column 5, the outer shaft 2 and the inner column 6 axially move along the inner shaft 3 and the outer column 7 respectively so as to become elastically deformed, thereby lessening physical impact from collision.

The input shaft 3 and an output shaft 9 are joined together at a base end side (a lower side in Fig. 1) of the steering shaft 1 by a torsion bar 8. This torsion bar 8 is inserted into the output shaft 9, and one end (an upper end in Fig. 1) is fixedly press-fitted into the input shaft 3. The other end (a lower end in Fig. 1) is fastened to the output shaft 9 via a pin or the like.

The output shaft 9 has a worm wheel 10 fixedly attached to the outer periphery of the output shaft by press-fitting. The output shaft 9 is joined to a rotary shaft of an electric motor 11 via a worm gear which meshes with the worm wheel 10. Specifically, the electric power steering apparatus of the present embodiment appropriately controls driving of the electric motor 11 by an ECU (not shown), to thus transmit rotational force of the electric motor 11 to the output shaft 9 by the worm gear and the worm wheel 10 and to impart auxiliary steering torque to the output shaft 9.

A gear box 5a housing the worm wheel 10 and the worm gear is equipped with a torque sensor 14 which has a coil yoke 12 and a coil 13 housed therein and which is disposed around a base end side (a lower side in Fig. 1) of the input shaft 3. This torque sensor 14 is configured so as to detect, by the coil 13, magnetic changes which develop in accordance with steering torque input by the steering wheel, which is stemming from distortion of the torsion bar 8.

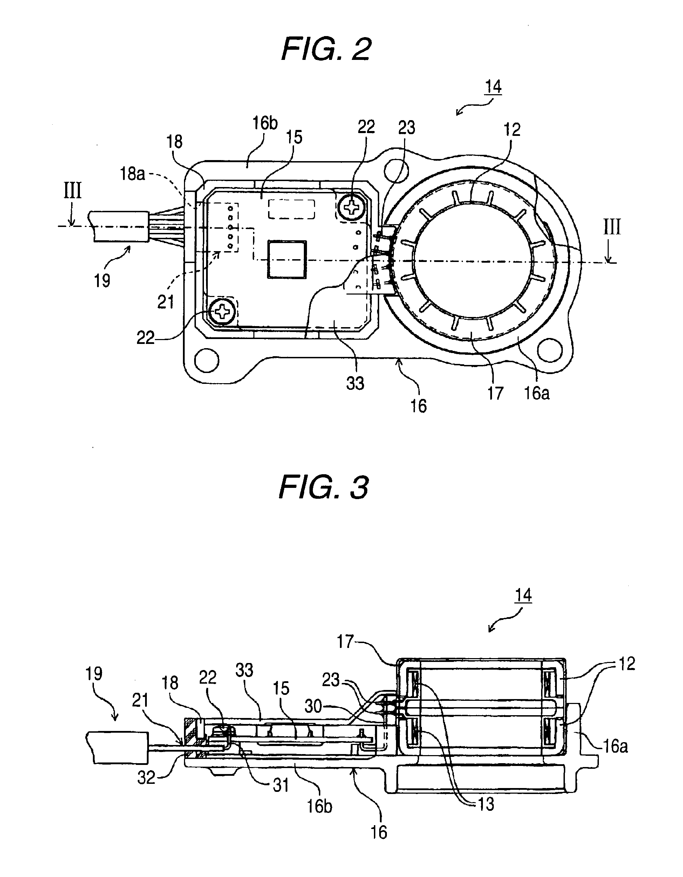

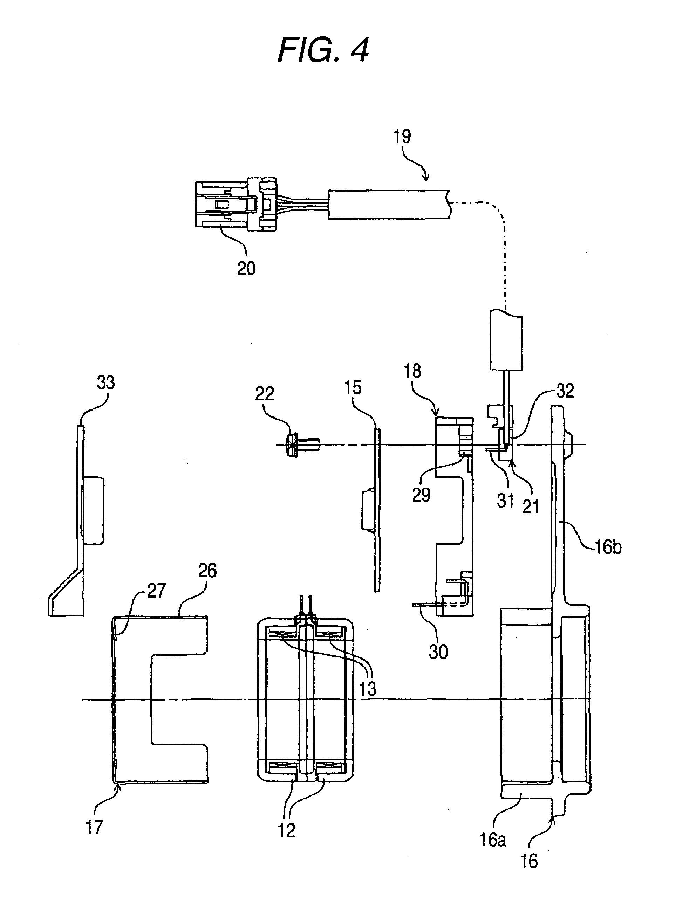

Fig. 2 is a partially-broken front view showing the appearance of the torque sensor 14 of a first embodiment of the present invention. Fig. 3 is a cross-sectional view of the torque sensor taken along line III-III shown in Fig. 2. Moreover, Fig. 4 is a developed view of the torque sensor shown in Fig. 3. In these drawings, the torque sensor 14 is built of the coil yoke 12 for housing the coil 13; a sensor substrate 15 for outputting a signal in accordance with the torque detected by the coil 13; a base section 16 for supporting and fixing the sensor substrate 15 and the pair of coil yokes 12, 12; a yoke retainer 17 for fixing the base section 16 while coating the pair of coil yokes 12, 12; a case section 18 for housing the sensor substrate 15; and a harness 19 for connecting the sensor substrate 15 with the ECU. These constituent components are modularized.

The harness 19 has at one end thereof a connector 20 (see Fig. 4) to be connected to the ECU and, at the other end thereof, a harness terminal section 21 to be connected to the sensor substrate 15. A signal output from the sensor substrate 15 is transmitted to the ECU by this harness 19.

The base section 16 has a hollow columnar projection section 16a to fit around the outer diameter of the coil yoke 12, and a plate section 16b to which the sensor substrate 15 is fixed in a supported manner by screws 22, 22.

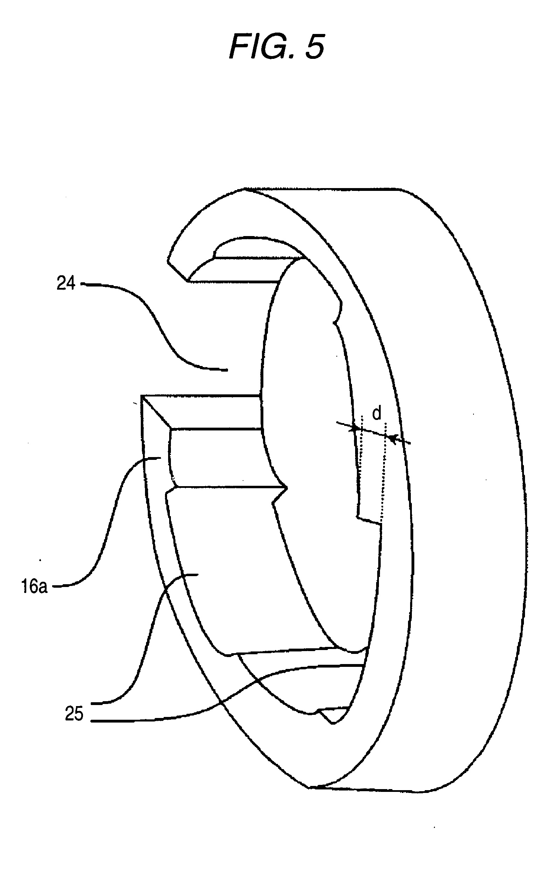

A pin 23 is formed in a portion of the coil yoke 12 in order to connect the coil 13 to the sensor substrate 15. As shown in a perspective view of the principal section of Fig. 5, a notch 24 is formed at a position of the hollow columnar projection section 16a of the base section 16 where the pin 23 is to protrude. Engaged sections 25, which are larger in diameter than the hollow columnar projection section 16a, are formed in the inner periphery of the hollow columnar projection section 16a. The engaged sections 25 are provided at uniform intervals in the hollow columnar projection section 16a along a circumferential direction thereof.

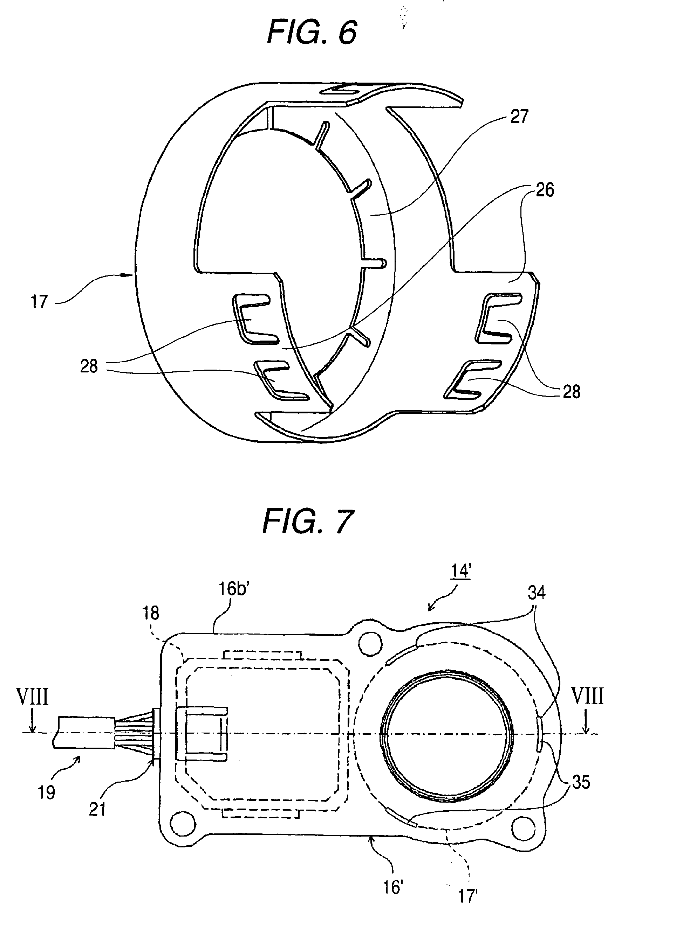

As shown in the perspective view of Fig. 6, the yoke retainer 17 used for fixing the coil yoke 12 to this hollow columnar projection section 16a has engaging sections 26 which mesh with the engaged sections 25 of the hollow columnar projection section 16a, and elastic sections 27 for pressing the pair of coil yokes 12, 12 against the base section 16; and is formed from a single plate material.

The engaging sections 26 are provided at uniform intervals in the circumferential direction so as to correspond to the respective engaged sections 25, and a plurality of pawls 28, 28 are provided in each of the engaging sections 26 so as to protrude outside in a radial direction. A dimensional difference "d" (see Fig. 5) between the hollow columnar projection section 16a and the engaged section 26 is greater than the thickness of the yoke retainer 17 and smaller than the height of the pawl 28 (a height of the engaging section 26 protruding from an outer peripheral surface).

The elastic sections 27 are formed from a plurality of arm members extending from the outer diameter of the yoke retainer 17 toward an inner diameter of the same. The armmembers are bent toward the inside of the yoke retainer 17 (toward the base section 16 in the axial direction) . As shown in Fig. 6, in the present embodiment, the elastic sections 27 of the yoke retainer 17 are formed from leaf springs formed from the plurality of arm members. However, the elastic sections 27 are not limited to the leaf springs, but may also be formed from disc springs which are connected together in, e.g., a circumferential direction.

The yoke retainer 17 is pushed into the hollow columnar projection section 16a with the pair of coil yokes 12, 12 being covered such that the positions of the engaging sections 26 coincide with the positions of the engaged sections 25 with respect to the circumferential direction. As a result, the pair of coil yokes 12, 12 covered with the yoke retainer 17 are urged toward the base section 16 by deflection of the elastic sections 27. At that time, counterforce which urges the yoke retainer 17 in a direction opposite the base section 16 is induced by the elastic sections 27. However, the pawls 28 formed so as to face the direction opposite the direction where the counterforce acts are elastically pressed against the engaged sections25. Consequently, engagement is made between the pawls 28 and the engaged sections 25. As a result, the yoke retainer 17 fixedly holds the coil yoke 12 in the base section 16 without involvement of the coil 13 moving in the axial direction of the input and output shafts 3 and 4. Moreover, the direction of the pawls 28 is forward with respect to the direction in which the yoke retainer is pushed, and no engagement is made. Hence, the yoke retainer 17 is readily, smoothly attached to the hollow columnar projection section 16a.

Meanwhile, the case section 18 made of resin is disposed on the plate section 16b of the aluminum base section 16 and has a sleeve 29 (see Fig. 4) for ensuring a current-carrying characteristic between the plate section 16b and the sensor substrate 15, and a first terminal 30 for connecting the sensor substrate 15 to the pins 23 of the coil 13. This case section 18 is formed into the shape of a box which surrounds the outer periphery of the sensor substrate 15 and protects the sensor substrate 15 housed therein.

Each of the sensor substrate 15 and the case section 18 is provided with tapped holes used for insertion of the screws 22. Consequently, the sensor substrate 15 and the case section 18 are simultaneously fastened to the plate section 16b by the screws 22.

Moreover, the harness terminal section 21 to be connected to the sensor substrate 15 is interposed between the case section 18 and the plate section 16b. This harness terminal section 21 has a second terminal section 31 to be connected and soldered to the sensor substrate 15, and a grommet 32 disposed around the second terminal 31.

When the torque sensor 14 of the present embodiment is assembled, the sensor substrate 15 and the case section 18 housing the sensor substrate 15 are fastened to the plate section 16b by the screws 22 with the harness terminal section 21 being engaged with a notch 18a formed in one side (the left side of Fig. 2) of the case section 18 (see Fig. 4). At this time, the harness terminal section 21 interposed between the case section 18 and the plate section 16b is fixed to the base section 16 as a result of the grommet 32 being compressed concurrently with fastening of the screws. Subsequently, the respective connection sections; namely, the pins 23 of the coil yoke 12 fixedly supported by the hollow columnar projection section 16a and the first terminal 30, the first terminal 30 and the sensor substrate 15, and the sensor substrate 15 and the second terminal 31, are soldered together. A substrate cover 33 is attached to an upper portion (see an upper side of Fig. 3) of the case section 18, so that the torque sensor module is completed.

In the present embodiment, the base section 16 is made of aluminum. However, the present invention is not limited to aluminum, but may also be formed from a material, so long as the material has an electrically-conductive property.

As mentioned above, in the torque sensor 14 of the first embodiment of the present invention, the yoke retainer 17 has both the function of covering the coil yoke 12 and the function of fixing the coil yoke 12 to the base section 16. Therefore, use of a member for fixing the coil yoke in the axial direction of the input and output shafts 3 and 4, as is required in the related art, is obviated. Consequently, miniaturization of the torque sensor 14 and saving of space in the axial direction of the input and output shafts 3 and 4 can be achieved. For these reasons, a sufficient collapse stroke in the steering shaft 1 and the steering column 5 can be ensured.

The sensor substrate 15, the case section 18, and the harness terminal section 21 are integrally positioned and fixed by only fastening the sensor substrate 15 to the plate section 16b with the screws 22. Thus, the number of processes employed when the individual sections are assembled can be diminished. Moreover, when there is performed operation for soldering the respective terminals 30 and 31, the respective constituent components are already fixed. Accordingly, facilitation of soldering operation and enhancement of reliability of soldering can be attained.

A second embodiment of the present invention will now be described by reference to Figs. 7 through 9. In these drawings, those members which are the same as those of the previously-described first embodiment are assigned the same reference numerals, and their repeated explanations are omitted.

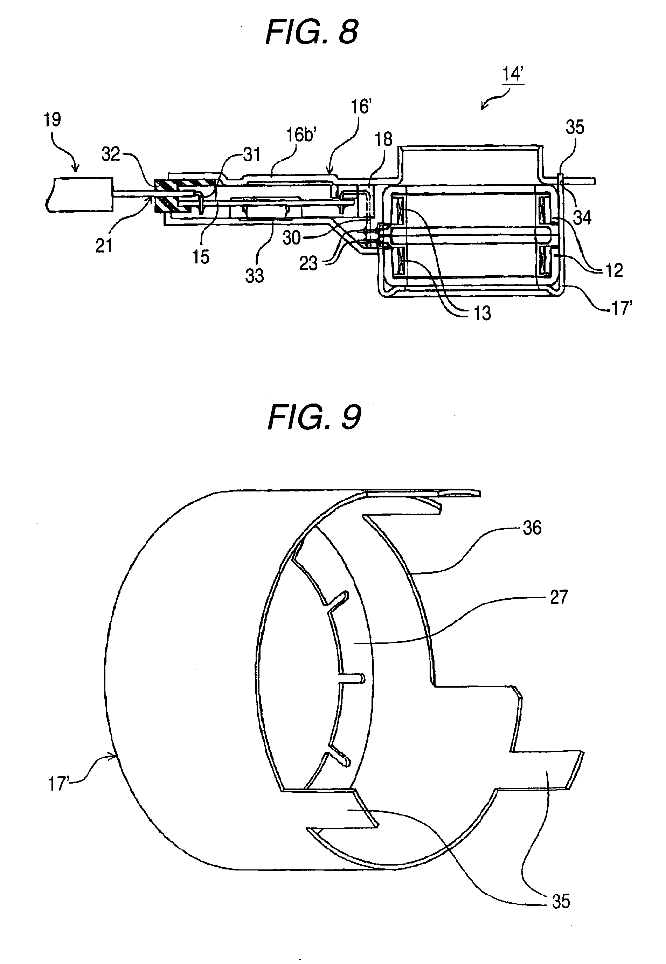

Fig. 7 is a rear view of a torque sensor of an electric power steering apparatus according to the second embodiment of the present invention. Fig. 8 is a cross-sectional view of the torque sensor taken along line VIII-VIII shown in Fig. 7. As shown in Figs. 7 and 8, a base section 16' of a torque sensor 14' of the present embodiment does not have the hollow columnar projection section 16a that is provided on the base section 16 of the first embodiment.

As shown in Fig. 9, a yoke retainer 17' used for fixing the coil yokes 12, 12 to the base section 16' has elastic sections 27 for pressing the pair of coil yokes 12, 12 against the base section 16' and projection sections 35 to be fitted into connection holes 34 formed in the base section 16' ; and is formed from a single plate material. In this yoke retainer 17', the notch 36 is formed in the position where the pins 23 of the coil yoke 12 protrude.

In the present embodiment, the elastic sections 27 of the yoke retainer 17' are formed from leaf springs formed from a plurality of arm members. However, the elastic sections are not limited to the leaf springs. The elastic sections may also be formed from disc springs connected in the circumferential direction, so long as the elastic sections can impart resilience used for pressing the coil yokes 12, 12 covered with the yoke retainer 17' against the base section 16'.

The yoke retainer 17' of such a structure is fixed to the base section 16 while covering the pair of coil yokes 12 and 12, by connection means which fits the projection sections 35 into the connection holes 34 of the base section 16' and subjects the connection sections to welding or caulking. As a result, the coil yokes 12, 12 covered in the yoke retainer 17' are fixedly supported by the base section 16' without moving in the axial directions of the input and output shafts 3 and 4.

As mentioned above, according to the torque sensor 14' of the second embodiment of the present invention, the yoke retainer 17' covering the pair of coils yokes 12, 12 is provided with the elastic sections 27 for pressing the coil yokes 12, 12 against the base section 16' and the projection sections 35 fitted into the connection holes 34 formed in the base section 16' . The projection sections 35 and the connection holes 34 are connected together, whereby the coil yokes 12, 12 are fixed to the base section 16'. As a result, in addition to a working-effect analogous to that yielded by the first embodiment being yielded, the configuration of the yoke retainer 17' and that of the base section 16' can be facilitated, and production cost can be curtailed.

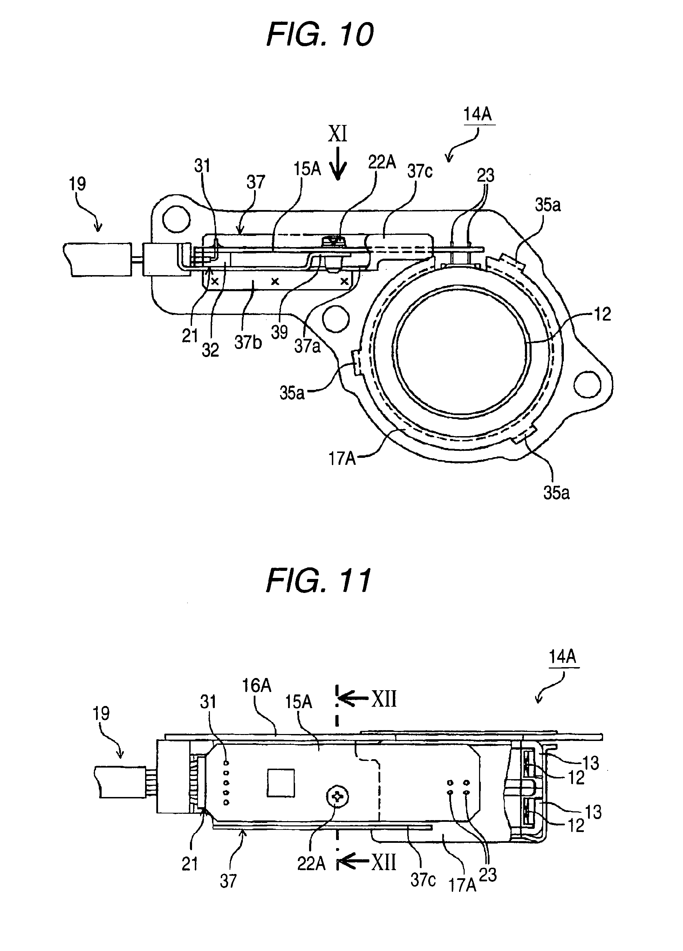

A third embodiment of the present invention will now be described by reference to Figs. 10 through 13 . In these drawings, those members which are the same as those of the first and second embodiments are assigned the same reference numerals, and their repeated explanations are omitted.

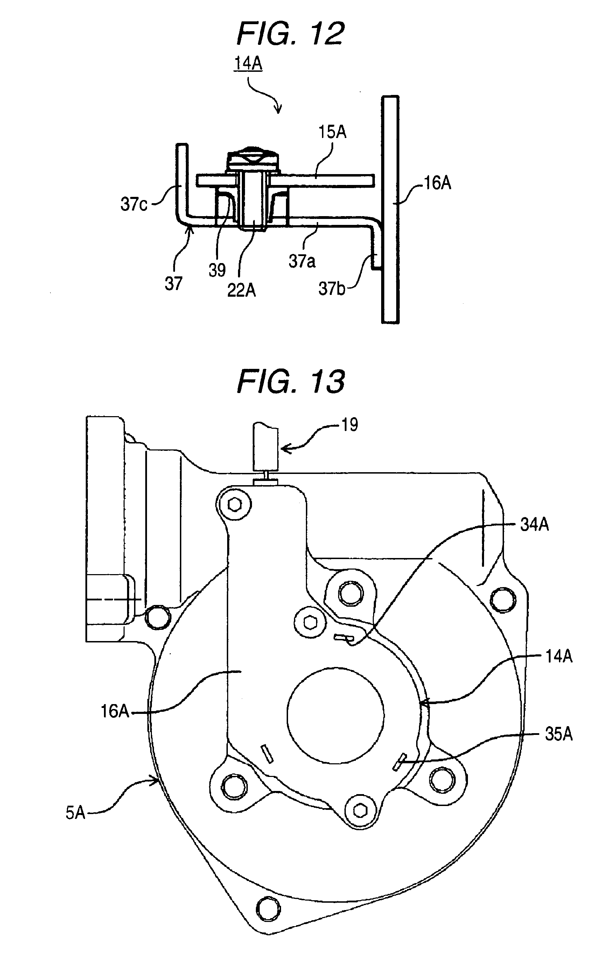

Fig. 10 is a front view showing the appearance of a torque sensor of a third embodiment of the present invention. Fig. 11 is a top viewof the torque sensor when viewed from the direction of arrow XI shown in Fig. 10. Fig. 12 is a cross-sectional view of the torque sensor taken along line XII-XII shown in Fig. 11 when viewed in the arrow direction. Fig. 13 is a view of the torque sensor of the third embodiment attached to a gear box when viewed from a steering wheel.

A torque sensor 14A of the present embodiment has a flat-plate-like base section 16A formed from a steel plate or the like; a frame member 37 provided upright on the base section 16A; a sensor substrate 15A which is fixedly fastened to the frame member 37 with a screw 22A and outputs a signal in accordance with torque detected by the coil 13; a yoke retainer 17A which fixes the pair of coil yokes 12, 12 to the base section 16A while covering the same; and a harness 19 for connecting the sensor substrate 15A to the ECU. These constituent components are modularized.

The yoke retainer 17A covering the coil yokes 12, 12 is analogous to the yoke retainer 17' described in connection with the second embodiment. The yoke retainer 17A has three projection sections 35A to be fitted into connection holes 34A (see Fig. 13) formed in the base section 16A, and subjects the projection sections 35A protruding from the connection holes 34A to caulking, welding, or the like, whereby the coil yokes 12, 12 covered with the yoke retainer 17A are fixedly supported by the base section 16A.

As shown in Fig. 12, the frame member 37 has a bottom surface section 37a perpendicularly provided upright on the base section 16A; a fixed section 37b formed as a result of one side end section (the right side of Fig. 12) of the bottom surface section 37a being downwardly folded at a right angle; and a protective wall section 37c formed as a result of the other side end section (a left side of Fig. 12) of the bottom surface section 37a being upwardly folded at a right angle. Specifically, the frame member 37 is formed by subjecting a single flat plate, such as a steel plate, to pressing such that a cross-sectional profile of the plate becomes S-shaped.

The substrate base 39 used for fixing the sensor substrate 15A is placed on the upper surface of the bottom surface section 37a, and the sensor substrate 15A is fixedly fastened to the substrate base 39 by the screws 22A. The fixed section 37b formed at one side end face of the frame member 37 is fixed to a predetermined position of the base section 16A by spot-welding or the like, whereby the bottom surface section 37a of the frame member 37 for fixedly supporting the sensor substrate 15A is provided upright on the base section 16A. Meanwhile, the protective wall section 37c formed along the other side end face of the frame member 37 has a height such as to protrude from the surface of the sensor substrate on which is fixed the substrate base 39. As shown in Fig. 13, the protective wall section prevents occurrence of interference of the sensor substrate 15A with the gear box 5a, which would otherwise be caused when the torque sensor 14A is built into the gear box 5a.

As shown in Fig. 10, a second terminal 31 connected and soldered to the sensor substrate 15A and the harness terminal section 21 formed from the grommet 32 around the second terminal 31 are interposed between the bottom surface section 37a of the frame member 37 and the sensor substrate 15A. As a result of the sensor substrate 15A being fixedly fastened to the frame member 37 while the second terminal 31 and the sensor substrate 15A remaining connected together, the grommet 32 interposed between the bottom surface section 37a of the frame member 37 and the sensor substrate 15A is compressed, and the harness terminal section 21 is fixed to a predetermined position. Meanwhile, the pins 23 of the coil yoke 12 supported and fixed by the base section 16A by the yoke retainer 17A are soldered directly to the sensor substrate 15A after the sensor substrate 15A has been fixedly fastened to the frame member 37.

As mentioned above, according to the torque sensor 14A of the third embodiment of the present invention, the coil yoke 12 is fixedly supported on the flat-plate-shaped base section 16A, and the sensor substrate 15A is fixedly fastened to the frame member 37 provided upright on the base section 16A via the screws 22A. As a result, in addition to a working-effect analogous to the working-effects yielded by the first and second embodiments being yielded, the sensor substrate 15A can be fixedly supported without posing difficulty on the assurance of solder of a connection section between the sensor substrate 15A and the second terminal 31 and the solder of the connection section between the sensor substrate 15A and the pins 23 of the coil yoke 12 . The torque sensor canbe assembledefficiently without performing complicated operation.

Moreover, the base section 16A can be formed from a flat metal plate, such as a steel plate or the like, and the frame member 37 can be formed by pressing a single steel plate. Accordingly, operation for processing these members is facilitated, and production cost can be curtailed.

Although the present invention has been described in detail by reference to specific embodiments, it is manifest for skilled artisans to be able to make various alterations or modifications to the embodiments without departing from the spirit and scope of the present invention.

The present application is based on Japanese Patent Application (JP-A-2005-286829) filed on September 30, 2005 in Japan and Japanese Patent Application (JP-A-2006-105018) filed on April 6, 2006 in Japan, the contents of which are hereby incorporated by reference.

### Industrial Applicability

The electric power steering apparatus of the present invention prevents movement of the coil in an axial direction of input and output shafts and enables saving of axial space required when a torque sensor is assembled to the housing. Moreover, the system renders simple a structure into which the torque sensor is to be assembled and leads to a reduction in production cost.

## Claims

1. An electric power steering apparatus comprising:
a torque sensor that detects torque and comprises:
a coil yoke;
a coil disposed within the coil yoke;
a base section; and
a yoke retainer which covers the coil yoke and fixes the coil yoke to the base section.

2. The electric power steering apparatus according to claim 1, wherein the yoke retainer comprises an elastic section for pressing the coil yoke against the base section.

3. The electric power steering apparatus according to claim 1 or 2, wherein
the base section comprises:
a hollow columnar projectionsectionfitting around an outer diameter of the coil yoke; and
engaged sections formed along an inner periphery of the hollow columnar projection section; and
the yoke retainer comprises engaging sections meshing with the engaged sections.

4. The electric power steering apparatus according to claim 3, wherein the engaging sections comprise pawls bent outward in a radial direction; and
the engaging sections are elastically pressed against the engaged sections when the yoke retainer is pushed into the hollow columnar projection section.

5. The electric power steering apparatus according to any one of claims 2 through 4, wherein the elastic section is a disc spring.

6. The electric power steering apparatus according to any one of claims 2 through 4, wherein the elastic section is a leaf spring.

7. An electric power steering apparatus comprising:
a torque sensor that detects torque and comprises:
a coil yoke;
a coil disposed within the coil yoke;
a sensor substrate that outputs a signal in accordance with torque detected by the coil;
a case section that accommodates the sensor substrate;
a base section comprising a plate section which support and fix the sensor substrate and the case section thereon; and
a harness terminal section which is connected to the sensor substrate and interposed between the plate section and the case section, wherein
the sensor substrate is fastened to the plate section by a fastening member so that positions of the sensor substrate, the case section and the harness terminal section are determined, and the sensor substrate, the case section, and the harness terminal section are monolithically fixed.

8. An electric power steering apparatus comprising:
a torque sensor that detects torque and comprises:
a coil yoke;
a coil disposed within the coil yoke;
a plate-like base section to which the coil yoke is fixed;
a metal frame member provided upright on the base section perpendicular thereto; and
a sensor substrate which is fixedly fastened to the frame member by a fastening member and which outputs a signal in accordance with torque detected by the coil.

9. The electric power steering apparatus according to claim 8, wherein the frame member comprises:
a bottom surface section comprising a substrate base to which the sensor substrate is fixed;
a fixed section which is formed along one edge face of the bottom surface section and is fixed to the base section; and
a protective wall section which is formed along the other edge face of the bottom surface section and comprises such a height as to protrude from a surface of the sensor substrate.

10. The electric power steering apparatus according to any one of claims 8 and 9, wherein the frame member is made from a single steel plate.

11. The electric power steering apparatus according to claim 9 or 10, wherein the fixed section is formed by folding downward the one edge face of the bottom surface section at a right angle, and
the protective wall section is formed by folding upward the other side edge face of the bottom surface section at a right angle.
